# EUROPEAN PATENT APPLICATION

(11) **EP 4 723 110 A1**
(43) Date of publication of application: **08.04.2026**
(21) Application number: 24858105.0
(22) Date of filing: 16.07.2024
(51) Int. Cl.: G10L 21/0208

(54) **SOUND SIGNAL PROCESSING METHOD AND ELECTRONIC DEVICE**

(30) Priority: 29.08.2023 CN 202311100760
(71) Applicant: Huawei Technologies Co., Ltd., Shenzhen, Guangdong 518129 (CN)
(72) Inventor: LUO, Can, Shenzhen, Guangdong 518129 (CN); CHANG, Qing, Shenzhen, Guangdong 518129 (CN); YIN, Mingjie, Shenzhen, Guangdong 518129 (CN); BAO, Guangzhao, Shenzhen, Guangdong 518129 (CN); CHEN, Li, Shenzhen, Guangdong 518129 (CN)
(74) Representative: Pfenning, Meinig & Partner mbB
(86) International application number: PCT/CN2024/105619
(87) International publication number: WO 2025/044561

(57) **Abstract**

A sound signal processing method and an electronic device are provided. The method includes: a digital signal processor DSP performs pre-processing on a first sound signal, to output a second sound signal; the DSP transmits the second sound signal to a neural-network processing unit NPU through a central processing unit CPU, and receives a third sound signal output by the NPU, where the third sound signal is a sound signal obtained by performing deep neural-network processing on the second sound signal by the NPU; and the DSP performs post-processing on the third sound signal, to output a target sound signal. According to the method and the electronic device, a transmission channel may be established between a DSP and an NPU in a terminal device by using a CPU, so that the terminal device can use computational power resources of the DSP and the NPU, to improve running performance of the device. In addition, because a deep neural-network processing capability of the NPU is invoked, a sound signal processing capability of the device can be improved.

## Description

This application claims priority to Chinese Patent Application No. 202311100760.5, filed with the China National Intellectual Property Administration on August 29, 2023 and entitled "SOUND SIGNAL PROCESSING METHOD AND ELECTRONIC DEVICE", which is incorporated herein by reference in its entirety.

### TECHNICAL FIELD

Embodiments of this application relate to the sound signal processing field, and more specifically, to a sound signal processing method and an electronic device.

### BACKGROUND

**In** a voice call scenario, people have a relatively high requirement on sound quality of a voice call. Currently, a sound processing method mainly includes two types: a conventional signal processing method and a deep learning processing method. In the conventional signal processing method, signal modeling is used, and a constructed model is relatively simple. In addition, in parameters based on which the model is constructed, a part of parameters are hypothesized parameters. When the hypothesized parameters are actually not true, processing effect may be poor. A model used in the deep learning processing method compared with that used in the conventional signal processing method is more complex. The model is obtained through learning and training based on a large amount of signal data, and has relatively good sound processing effect. However, a large quantity of computational power resources need to be consumed during processing. In addition, by using conventional technologies, it is difficult for a terminal device to use computational power resources of an NPU and apply the deep learning processing method to the terminal device.

### SUMMARY

This application provides a sound signal processing method and an electronic device. According to the method and the electronic device, a transmission channel may be established between a DSP and an NPU in a terminal device by using a CPU, so that the terminal device can use computational power resources of the DSP and the NPU, to improve running performance of the device. In addition, because a deep neural-network processing capability of the NPU is invoked, a sound signal processing capability of the device can be improved.

According to a first aspect, a sound signal processing method is provided. The method includes: a digital signal processor DSP performs pre-processing on a first sound signal, to output a second sound signal; the DSP transmits the second sound signal to a neural-network processing unit NPU through a central processing unit CPU, and receives a third sound signal output by the NPU, where the third sound signal is a sound signal obtained by performing deep neural-network processing on the second sound signal by the NPU; and the DSP performs post-processing on the third sound signal, to output a target sound signal.

In some embodiments, the pre-processing includes one or more of echo cancellation, noise cancellation, gain control, and frequency response control.

In some embodiments, the deep neural-network processing includes residual echo cancellation and/or noise cancellation.

In some embodiments, the post-processing includes gain control and frequency response control.

In this embodiment of this application, a transmission channel is established between a DSP and an NPU in a terminal device by using a CPU, so that mutual transmission of signals and data can be implemented between the DSP and the NPU. Therefore, the terminal device can use computational power resources of the DSP and the NPU. For example, pre-processing and post-processing may be performed in the DSP, and deep neural-network processing may be performed in the NPU, to improve running performance of the device. In addition, because a deep neural-network processing capability of the NPU is invoked, a sound signal processing capability of the device can be improved, so that the device has better effect of processing a sound signal.

With reference to the first aspect, in a possible implementation, the DSP transmitting the second sound signal to the NPU through the CPU includes:
the DSP transmits the second sound signal to the CPU through a shared memory, so that the CPU transmits the second sound signal to the NPU by invoking the NPU, where the shared memory is a shared memory of the DSP and the CPU.

In this embodiment of this application, the transmission channel is established between the DSP and the NPU in the terminal device by using the CPU, so that mutual transmission of signals and data can be implemented between the DSP and the NPU. Therefore, the terminal device can use the computational power resources of the DSP and the NPU, and the terminal device can use the deep neural-network processing capability of the NPU. In this way, a deep neural-network processing model of the NPU can be deployed on the terminal device, to greatly improve a sound processing capability of the terminal device.

With reference to the first aspect, in a possible implementation, the method further includes: when the DSP receives an (n+i)^{th} frame of first sound signal, the DSP outputs an i^{th} frame of target sound signal; and when the DSP receives an (n+i+1)^{th} frame of first sound signal, the DSP outputs an (i+1)^{th} frame of target sound signal, where n is a positive integer less than or equal to 10, i is a natural number, and i=1, 2, 3, ....

In this embodiment of this application, a delay exists between receiving a first sound signal by the DSP and outputting a target sound signal by the DSP. In other words, deep neural-network processing performed by the NPU and pre-processing performed by the DSP may be synchronously performed. For a same frame of sound signal, deep neural-network processing performed by the NPU is asynchronous processing for pre-processing performed by the DSP. In this way, after processing a current frame of first sound signal, the DSP does not need to wait for a third sound signal that corresponds to the current frame and that is output by the NPU, and continues to process a next frame of first sound signal. Within a delay frame number range, the DSP receives the third sound signal that corresponds to the current frame and that is output by the NPU. The DSP only needs to perform post-processing on the corresponding third sound signal after a delay frame number is reached and perform output. In this way, sound signals can be continuously output in a case of an insufficient buffer of the NPU, to meet requirements for continuity and real-time performance of sound output.

According to a second aspect, a sound signal processing method is provided. The method includes: a neural-network processing unit NPU receives a second sound signal through a central processing unit CPU, where the second sound signal is a sound signal obtained by performing pre-processing on a first sound signal by a digital signal processor DSP; the NPU performs deep neural-network processing on the second sound signal, to output a third sound signal; and the NPU transmits the third sound signal to the DSP through the CPU.

In some embodiments, the pre-processing includes one or more of echo cancellation, noise cancellation, gain control, and frequency response control.

In some embodiments, the deep neural-network processing includes residual echo cancellation and/or noise cancellation.

In this embodiment of this application, a transmission channel is established between a DSP and an NPU in a terminal device by using a CPU, so that mutual transmission of signals and data can be implemented between the DSP and the NPU. Therefore, the terminal device can use computational power resources of the DSP and the NPU. For example, pre-processing and post-processing may be performed in the DSP, and deep neural-network processing may be performed in the NPU, to improve running performance of the device. In addition, because a deep neural-network processing capability of the NPU is invoked, a sound signal processing capability of the device can be improved, so that the device has better effect of processing a sound signal.

With reference to the second aspect, in a possible implementation, the NPU transmitting the third sound signal to the DSP through the CPU includes: the NPU transmits the third sound signal to the DSP through the CPU and a shared memory, where the shared memory is a shared memory of the DSP and the CPU.

In this embodiment of this application, the transmission channel is established between the DSP and the NPU in the terminal system device by using the CPU, so that mutual transmission of signals and data can be implemented between the DSP and the NPU. Therefore, the terminal system device can use the computational power resources of both the DSP and the NPU, and the terminal device can use the deep neural-network processing capability of the NPU. In this way, a deep neural-network processing model of the NPU can be deployed on the terminal device, to greatly improve a sound processing capability of the terminal device.

According to a third aspect, a sound signal processing method is provided. The method includes: when a screen of a first device displays a call interface, displaying a first prompt on the screen of the first device, where the first prompt is used to prompt a user to confirm whether to enable an intelligent noise cancellation mode; or when the first device is in a call state, displaying a first notification in a notification bar of the first device, where the first notification is used to prompt a user to confirm whether to enable an intelligent noise cancellation mode. In response to a user operation of confirming to enable the intelligent noise cancellation mode, the first device performs the method according to the first aspect or any possible implementation of the first aspect or performs the method according to the second aspect or any possible implementation of the second aspect.

In this embodiment of this application, a method for triggering deep processing on a sound signal is provided for the user. When using a call function of a terminal device, the user can determine, according to an actual requirement, whether to enable the intelligent noise cancellation mode. When the user determines that the intelligent noise cancellation mode needs to be enabled, the terminal device performs deep processing on a sound signal by using computational power resources of a DSP and an NPU, and outputs a processed signal.

According to a fourth aspect, an electronic device is provided. The electronic device includes a digital signal processor DSP, a central processing unit CPU, and a neural-network processing unit NPU. The DSP is configured to perform pre-processing on a first sound signal, to output a second sound signal. The DSP is further configured to transmit the second sound signal to the NPU through the CPU. The NPU is configured to perform deep neural-network processing on the second sound signal, to output a third sound signal. The NPU is further configured to transmit the third sound signal to the DSP through the CPU. The DSP is further configured to perform post-processing on the third sound signal, to output a target sound signal.

In some embodiments, the pre-processing includes one or more of echo cancellation, noise cancellation, gain control, and frequency response control.

In some embodiments, the deep neural-network processing includes residual echo cancellation and/or noise cancellation.

In some embodiments, the post-processing includes gain control and frequency response control.

In this embodiment of this application, a transmission channel is established between a DSP and an NPU in a terminal device by using a CPU, so that mutual transmission of signals and data can be implemented between the DSP and the NPU. Therefore, the terminal device can use computational power resources of the DSP and the NPU. For example, pre-processing and post-processing may be performed in the DSP, and deep neural-network processing may be performed in the NPU, to improve running performance of the device. In addition, because a deep neural-network processing capability of the NPU is invoked, a sound signal processing capability of the device can be improved, so that the device has better effect of processing a sound signal.

With reference to the fourth aspect, in a possible implementation, the DSP is specifically configured to transmit the second sound signal to the CPU through a shared memory, where the shared memory is a shared memory of the DSP and the CPU. The CPU is configured to transmit the second sound signal to the NPU by invoking the NPU.

In this embodiment of this application, the transmission channel is established between the DSP and the NPU in the terminal device by using the CPU, so that mutual transmission of signals and data can be implemented between the DSP and the NPU. Therefore, the terminal device can use the computational power resources of the DSP and the NPU, and the terminal device can use the deep neural-network processing capability of the NPU. In this way, a deep neural-network processing model of the NPU can be deployed on the terminal device, to greatly improve a sound processing capability of the terminal device.

With reference to the fourth aspect, in a possible implementation, the DSP is specifically configured to: when an (n+i)^{th} frame of first sound signal is received, output an i^{th} frame of target sound signal; and when an (n+i+1)^{th} frame of first sound signal is received, output an (i+1)^{th} frame of target sound signal, where n is a positive integer less than or equal to 10, i is a natural number, and i=1, 2, 3, ....

In this embodiment of this application, a delay exists between receiving a first sound signal by the DSP and outputting a target sound signal by the DSP. In other words, deep neural-network processing performed by the NPU and pre-processing performed by the DSP may be synchronously performed. For a same frame of sound signal, deep neural-network processing performed by the NPU is asynchronous processing for pre-processing performed by the DSP. In this way, after processing a current frame of first sound signal, the DSP does not need to wait for a third sound signal that corresponds to the current frame and that is output by the NPU, and continues to process a next frame of first sound signal. Within a delay frame number range, the DSP receives the third sound signal that corresponds to the current frame and that is output by the NPU. The DSP only needs to perform post-processing on the corresponding third sound signal after a delay frame number is reached and perform output. In this way, sound signals can be continuously output in a case of an insufficient buffer of the NPU, to meet requirements for continuity and real-time performance of sound output.

According to a fifth aspect, an electronic device is provided. The electronic device includes: a display module, configured to: when a screen of the electronic device displays a call interface, display a first prompt on the screen of the electronic device, where the first prompt is used to prompt a user to confirm whether to enable an intelligent noise cancellation mode; or when the electronic device is in a call state, display a first notification in a notification bar of the first device, where the first notification is used to prompt a user to confirm whether to enable an intelligent noise cancellation mode; and an execution module, configured to: in response to a user operation of confirming to enable the intelligent noise cancellation mode, perform the method according to the first aspect or any possible implementation of the first aspect or perform the method according to the second aspect or any possible implementation of the second aspect.

In this embodiment of this application, when using a call function of a terminal device, the user can determine, according to an actual requirement, whether to enable the intelligent noise cancellation mode. When the user determines that the intelligent noise cancellation mode needs to be enabled, the terminal device performs deep processing on a sound signal by using computational power resources of a DSP and an NPU, and outputs a processed signal.

According to a sixth aspect, an electronic device is provided. The electronic device includes a memory and a processor. The memory is configured to store computer program code, and the processor is configured to execute the computer program code stored in the memory, to implement the method according to the first aspect or any possible implementation of the first aspect, or implement the method according to the second aspect or any possible implementation of the second aspect, or implement the method according to the third aspect.

According to a seventh aspect, a chip is provided. The chip stores instructions. When the instructions are run on a device, the chip is enabled to perform the method according to the first aspect or any possible implementation of the first aspect, or the chip is enabled to perform the method according to the second aspect or any possible implementation of the second aspect, or perform the method according to the second aspect or any possible implementation of the second aspect, or perform the method according to the third aspect.

According to an eighth aspect, a computer-readable storage medium is provided. The computer-readable storage medium stores a computer program or instructions. When the computer program or the instructions are executed, the method according to the first aspect or any possible implementation of the first aspect is implemented, or the method according to the second aspect or any possible implementation of the second aspect is implemented, or the method according to the third aspect is implemented.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of an architecture of a sound signal processing system according to an embodiment of this application;
FIG. 4 is a schematic flowchart of a sound signal processing method according to an embodiment of this application;
FIG. 5 is a schematic flowchart of another sound signal processing method according to an embodiment of this application;
FIG. 6 is a schematic flowchart of another sound signal processing method according to an embodiment of this application;
FIG. 7 is a schematic flowchart of another sound signal processing method according to an embodiment of this application;
FIG. 8 is a diagram of a sound signal processing apparatus according to an embodiment of this application;
FIG. 9(a), FIG. 9(b), and FIG. 9(c) are a diagram of an interface of enabling an intelligent noise cancellation mode according to an embodiment of this application;
FIG. 10(a) and FIG. 10(b) are a diagram of another interface of enabling an intelligent noise cancellation mode according to an embodiment of this application; and
FIG. 11(a) and FIG. 11(b) are a diagram of still another interface of enabling an intelligent noise cancellation mode according to an embodiment of this application.

### DESCRIPTION OF EMBODIMENTS

The following describes technical solutions of this application with reference to accompanying drawings. It is clear that the described embodiments are merely some but not all of embodiments of this application.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of" means two or more.

A method provided in embodiments of this application may be applied to an electronic device such as a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

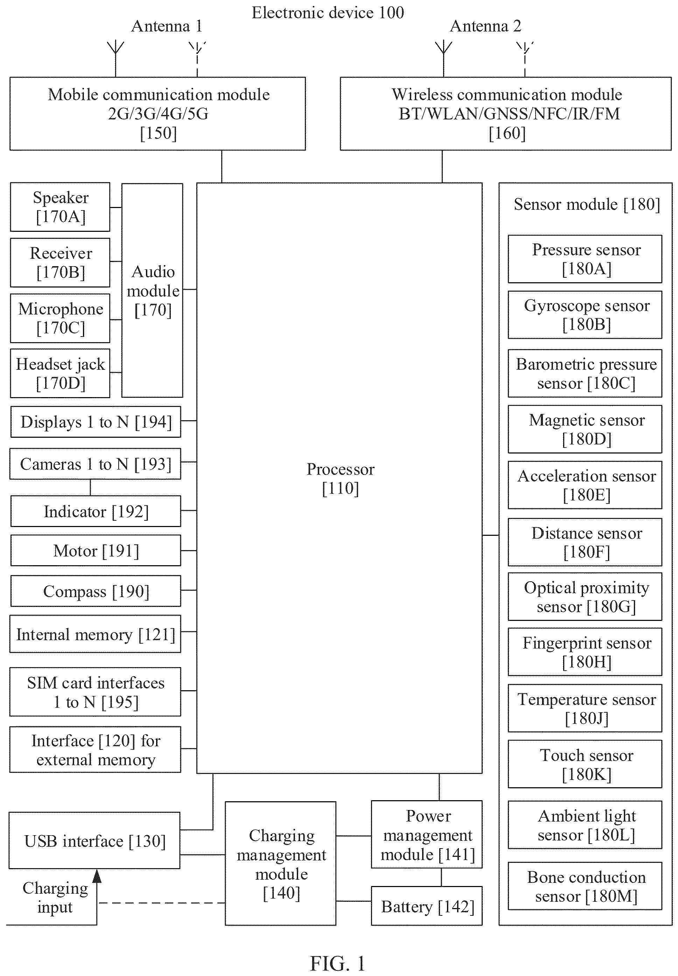

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through the PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI interface, to implement a shooting function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may be alternatively configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. Alternatively, the interface may be configured to connect to another electronic device such as an AR device.

It may be understood that an interface connection relationship between modules that is illustrated in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide wireless communication solutions including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communication module 160 may be one or more components integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation over the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), and the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a transfer mode between human brain neurons; and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an App required by at least one function (for example, a sound playing function or an image playing function), and the like. The data storage area may store data (for example, audio data or an address book) and the like created in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and sound recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to receive a voice.

The microphone 170C, also referred to as a "mike" or a "mic", is configured to convert a sound signal into an electrical signal. When making a call or sending a speech message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise cancellation function. In some other embodiments, three, four, or more microphones 170C may be alternatively disposed in the electronic device 100, to collect a sound signal, implement noise cancellation, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detected signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an application icon of Messages, an instruction for checking a message is performed. When a touch operation whose touch operation intensity is greater than or equal to the first pressure threshold is performed on the application icon of Messages, an instruction for creating a new message is performed.

The gyroscope sensor 180B may be configured to determine a motion posture of the electronic device 100. In some embodiments, an angular velocity of the electronic device 100 around three axes (that is, axes x, y, and z) may be determined through the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip cover or a leather case by using the magnetic sensor 180D. In some embodiments, when the electronic device 100 is a clamshell phone, the electronic device 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during shooting. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed in the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195. The plurality of cards may be of a same type or different types. The SIM card interface 195 may be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an embedded-SIM (embedded-SIM, eSIM) card, namely, an embedded-SIM card. The eSIM card may be embedded in the electronic device 100, and cannot be separated from the electronic device 100.

It should be understood that a calling card in embodiments of this application includes but is not limited to a SIM card, an eSIM card, a universal subscriber identity module (universal subscriber identity module, USIM) card, a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

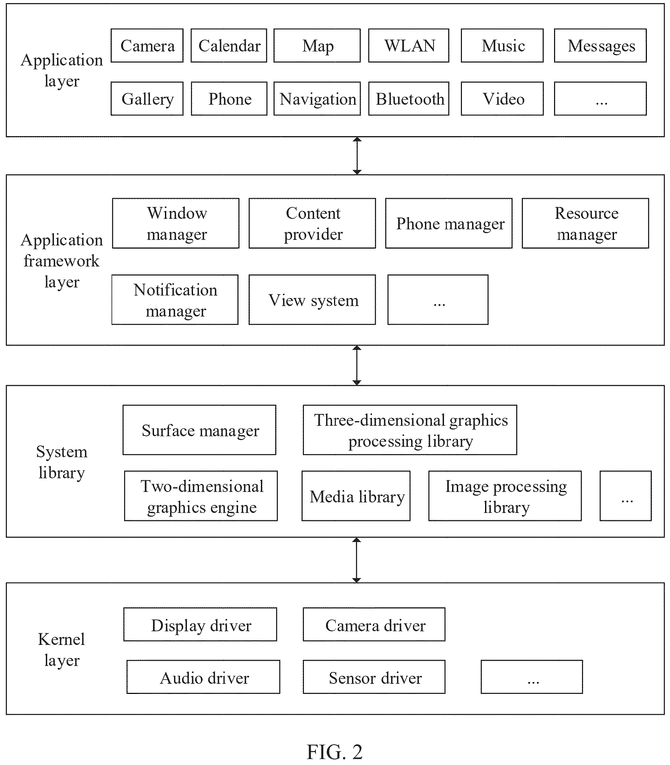

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, Android runtime (Android runtime) and a system library, and a kernel layer. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a Messages notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

The technical solutions in embodiments of this application may be applied to an electronic device having a voice call function. For example, the technical solutions may be applied to an electronic device such as a mobile phone, a foldable screen, or a tablet. A main application scenario may be a scenario in which a voice call is made by using the electronic device, for example, a scenario in which a video call is made or a call is answered. The technical solutions may be specifically applied to a noise cancellation scenario of a voice call.

The electronic device in embodiments of this application may be a television, a desktop computer, or a notebook computer, or may be a portable electronic device, for example, a mobile phone, a tablet computer, a camera, a camcorder, a video recorder, a smartwatch, or a smart band, or may be another electronic device having a voice call function, an electronic device in a 5G network, an electronic device in a future evolved public land mobile network (public land mobile network, PLMN), or the like. This is not limited in this application.

In a voice call scenario, people have a relatively high requirement on sound quality of a voice call. Currently, a sound processing method mainly includes two types: a conventional signal processing method and a deep learning processing method. In the conventional signal processing method, signal modeling is used, and a constructed model is relatively simple. In addition, in parameters based on which the model is constructed, a part of parameters are hypothesized parameters. When the hypothesized parameters are actually not true, processing effect may be poor. A model used in the deep learning processing method compared with the conventional signal processing method is more complex. The model is obtained through learning and training based on a large amount of signal data, and has relatively good sound processing effect. However, a large quantity of computational power resources need to be consumed during processing. In addition, by using conventional technologies, it is difficult for a terminal device to use computational power resources of an NPU and apply the deep learning processing method to the terminal device.

In view of this, this application provides a sound signal processing method and an electronic device. In the method, a transmission channel is established between a DSP and an NPU in a terminal device by using a CPU, so that mutual transmission of signals can be implemented between the DSP and the NPU. Therefore, the terminal device can use computational power resources of the DSP and the NPU. For example, pre-processing and post-processing may be performed in the DSP, and deep neural-network processing may be performed in the NPU. In this way, a system can have abundant computational power resources. In addition, because a deep neural-network processing capability of the NPU is invoked, the terminal device has better effect of processing a sound signal.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that one or more embodiments of this application include a specific feature, structure, or characteristic described with reference to the embodiments. Therefore, the statements "an embodiment", "some embodiments", "another embodiment", "some other embodiments", and the like that appear in different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

To understand the solutions of this application more clearly, the following first describes related terms in embodiments of this application.

### 1. Digital signal processor (digital signal processor, DSP)

The DSP is a special microprocessor, and is a device that processes a large amount of information by using digital signals. A working principle of the DSP is to receive an analog signal, convert the analog signal into a digital signal of 0 or 1, modify, delete, and enhance the digital signal, and decode the digital data into an analog data format or an actual environment format in another system chip. The DSP is not only programmable, but also can run tens of millions of complex instruction programs per second far more than a general-purpose microprocessor. The DSP is an increasingly important computer chip in the digital electronic world.

### 2. Neural-network processing unit (neural-network processing unit, NPU)

The neural-network processing unit (NPU) uses a "data-driven parallel computing" architecture and is especially good at processing massive multimedia data such as video and image data.

### 3. Central processing unit (central processing unit, CPU)

As a computing and control core of a computer system, the CPU is a final execution unit for information processing and program running.

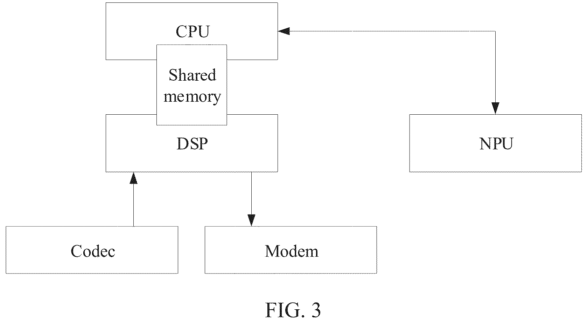

For example, FIG. 3 is a diagram of an architecture of a sound signal processing system according to an embodiment of this application. As shown in FIG. 3, the system architecture includes a codec (codec), a modem (modem), a digital signal processor (digital signal processor, DSP), a central processing unit (central processing unit, CPU), and a neural-network processing unit (neural-network processing unit, NPU). The DSP establishes a connection with the CPU by using a shared memory. The CPU can schedule the NPU to perform a related processing operation, and can implement mutual signal transmission with the NPU. Details are as follows:

The codec (codec) is configured to convert an analog sound signal into a digital sound signal before processing the sound signal. In this way, the sound signal can be transmitted between the DSP, the CPU, and the NPU, and the sound signal can be processed.

The modem (modem) is configured to: after the digital sound signal is processed, convert a processed digital sound signal into an analog sound signal, and further output the analog sound signal.

In an example, an uplink is used as an example. A sound signal flow is mic-codec-DSP-CPU-NPU-DSP-modem. Herein, an analog sound signal passes through the mic, and the analog sound signal is converted into a digital sound signal after being processed by the codec. The DSP, the CPU, and the NPU process the digital sound signal. A processed digital sound signal is modulated into an analog sound signal after being processed by the modem. The analog sound signal is finally output. In other words, the sound signal received by the codec is an analog sound signal, and the codec converts the analog sound signal into a digital sound signal, so that the sound signal can be transmitted in a digital-signal form between the DSP, the CPU, and the NPU.

The DSP and the NPU use the CPU as a contact medium to collaboratively process the sound signal converted by the codec, to obtain a target sound signal.

In an embodiment, the processing of the sound signal converted by the codec may include pre-processing, deep neural-network processing (which may also be described as AI model processing), and post-processing. The pre-processing is completed by the DSP, and may include one or more of echo cancellation, noise cancellation, gain control, and frequency response control. The deep neural-network processing is completed by the NPU, and may include noise cancellation processing and residual echo suppression processing. The post-processing is completed by the DSP, and may include gain control and frequency response control.

The DSP transmits the target sound signal to the modem, and the modem converts the target sound signal from a digital sound signal to an analog sound signal, that is, obtains the target sound signal in an analog-signal format.

In embodiments of this application, transmission and processing of a sound signal may be transmission and processing of sound data.

In embodiments of this application, a transmission channel between the digital signal processor and the neural-network processing unit is established between the digital signal processor and the neural-network processing unit by using the central processing unit, so that mutual signal transmission can be implemented between the digital signal processor and the neural-network processing unit. Therefore, the system can use computational power resources of the DSP and the NPU. For example, pre-processing and post-processing may be performed in the DSP, and deep neural-network processing may be performed in the NPU. In this way, the system can have abundant computational power resources. In addition, because a deep neural-network processing capability of the NPU is invoked, better effect of processing a sound signal is implemented.

It should be understood that in embodiments of this application, a connection is established between the DSP and the NPU by using the CPU, and a process in which the NPU performs deep neural-network processing on a sound signal depends on a speech deep learning model established by the NPU. The solutions in embodiments of this application enables the speech deep learning model to be implemented on a terminal product such as a mobile phone or a tablet, thereby improving voice call quality on the terminal device such as the mobile phone or the tablet.

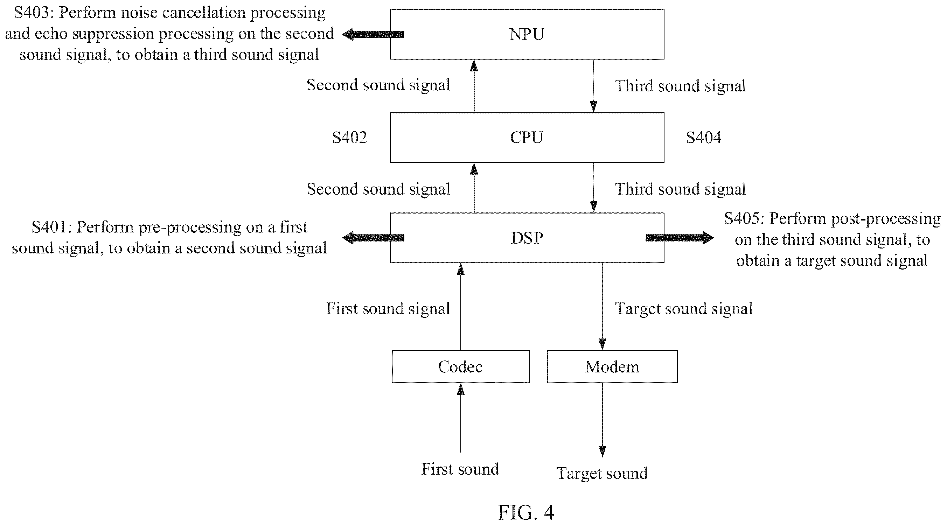

For example, FIG. 4 is a schematic flowchart of a sound signal processing method 400 according to an embodiment of this application. As shown in FIG. 4, the method 400 includes the following steps.

A codec (codec) converts a received first sound (in an analog signal format) into a first sound signal (in a digital signal format), and transmits the first sound signal to a DSP.

The first sound signal may include multi-microphone signals (mic signals), and may further include a plurality of echo reference signals (ref signals).

In an example, the first sound signal is 3-microphone signal (3-mic signal) inputs and 2 echo reference signals (2-ref signals).

The mic signal is a sound signal collected by a microphone. The multi-mic signals are sound signals collected by a plurality of microphones. The mic signal may be converted into a digital signal by the codec. The ref signal is a far-end sound signal played by a downlink loudspeaker, and is a digital signal present before conversion performed by a modem.

S401: After receiving a first sound signal, a DSP performs pre-processing on the first sound signal, to obtain a second sound signal.

In some embodiments, the DSP performing pre-processing on the first sound signal includes: the DSP performs echo cancellation on the first sound signal, which may be specifically that the DSP performs filtering-based echo cancellation on the first sound signal; may further include: the DSP performs noise cancellation on the first sound signal; and may further include: the DSP performs gain control and frequency response control on the first sound signal.

In an implementation, the DSP includes a first processing module, and the first processing module is configured to process the first sound signal, to obtain the second sound signal.

S402: The DSP transmits the second sound signal to an NPU by using a CPU.

In an implementation, the DSP transmits the second sound signal to the CPU by using a shared memory with the CPU, and the CPU further invokes the NPU to perform deep neural-network processing on the second sound signal.

S403: The NPU performs deep neural-network processing on the second sound signal, to obtain a third sound signal.

In some embodiments, the NPU performing deep neural-network processing on the second sound signal includes: the NPU performs noise cancellation on the first sound signal; and may further include: the NPU performs residual echo suppression on the first sound signal.

In an implementation, the NPU establishes a second processing module, and the second processing module is configured to process the second sound signal, to obtain the third sound signal.

In an example, the second processing module is a speech deep learning model.

S404: The NPU transmits the third sound signal to the DSP by using the CPU.

In an implementation, the NPU transmits the third sound signal to the CPU, and the DSP obtains the third sound signal by using the shared memory with the CPU.

S405: The DSP performs post-processing on the third sound signal to obtain a target sound signal, and transmits the target sound signal to a modem.

In some embodiments, the DSP performing post-processing on the third sound signal includes: the DSP performs gain control and frequency response control on the third sound signal.

In an implementation, the DSP includes a third processing module, and the third processing module is configured to process the third sound signal, to obtain the target sound signal.

The modem (modem) converts the received target sound signal (in a digital-signal format) into a target sound (in an analog-signal format).

It should be understood that performing transmission and processing on a sound signal in this embodiment of this application may be transmitting and processing the sound signal, or may be transmitting and processing sound-related data, or may be transmitting and processing the sound signal and sound-related data.

In this embodiment of this application, a transmission channel is established between a DSP and an NPU in a terminal device by using a CPU, so that mutual transmission of signals and data can be implemented between the DSP and the NPU. Therefore, the terminal device can use computational power resources of the DSP and the NPU. For example, pre-processing and post-processing may be performed in the DSP, and deep neural-network processing may be performed in the NPU. In this way, the device can have abundant computational power resources. In addition, because a deep neural-network processing capability of the NPU is invoked, the terminal device has better effect of processing a sound signal.

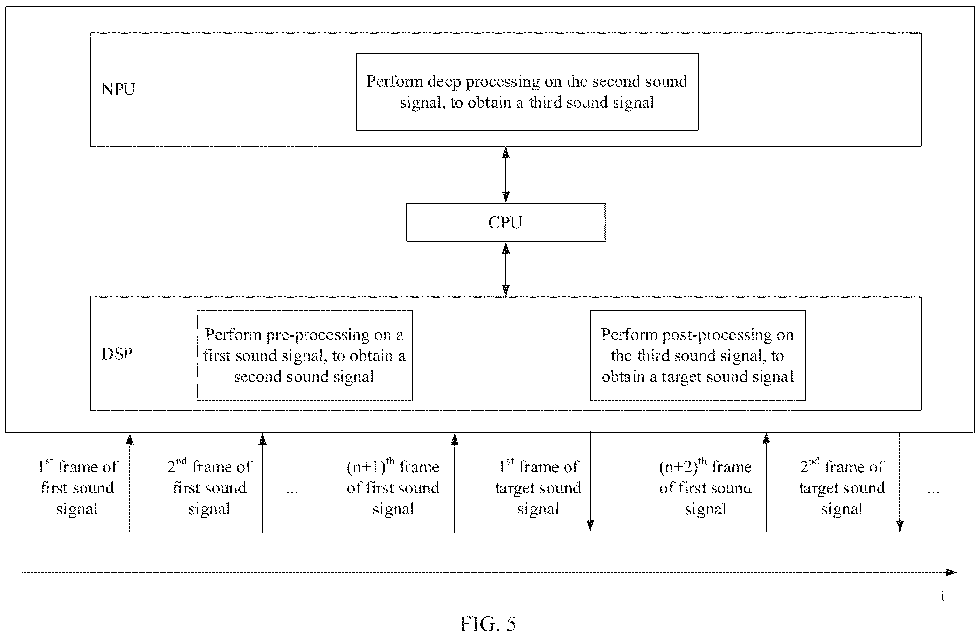

For example, based on the embodiment shown in FIG. 4, FIG. 5 is a schematic flowchart of another sound signal processing method according to an embodiment of this application. As shown in FIG. 5, in the method,

The transmission channel is established between the DSP and the NPU by using the CPU, so that mutual transmission of signals and data can be implemented between the DSP and the NPU. A connection is established between the DSP and the CPU by using the shared memory, and the CPU implements interaction with the NPU by invoking the NPU.

The DSP is configured to perform pre-processing on the received first sound signal, to obtain the second sound signal.

A process of performing pre-processing on the first sound signal is described in detail in the embodiment shown in FIG. 4. For brevity, details are not described herein again.

The NPU is configured to perform deep neural-network processing on the second sound signal, to obtain the third sound signal.

A process of performing deep neural-network processing on the second sound signal is described in detail in the embodiment shown in FIG. 4. For brevity, details are not described herein again.

The DSP is further configured to perform post-processing on the third sound signal, to obtain the target sound signal.

A process of performing post-processing on the third sound signal is described in detail in the embodiment shown in FIG. 4. For brevity, details are not described herein again.

In some embodiments, a sound signal may be transmitted in frames. For example, the DSP receives a 1^{st} frame of first sound signal, and performs pre-processing on the 1^{st} frame of first sound signal to obtain a corresponding 1^{st} frame of second sound signal; the DSP receives the 2^{nd} frame of first sound signal, and performs pre-processing on the 2^{nd} frame of first sound signal to obtain a corresponding 2^{nd} frame of second sound signal; the NPU performs deep neural-network processing on the 1^{st} frame of second sound signal and the 2^{nd} frame of second sound signal to obtain a corresponding 1^{st} frame of third sound signal and a corresponding 2^{nd} frame of third sound signal; and the DSP performs post-processing on the 1^{st} frame of third sound signal and the 2^{nd} frame of third sound signal to obtain a 1^{st} frame of target sound signal and a 2^{nd} frame of target sound signal.

In the embodiment shown in FIG. 5, that an n-frame delay exists between processing the first sound signal by the DSP and processing the third sound signal by the DSP may also be understood as follows: processing the first sound signal by the DSP is synchronous with processing the second sound signal by the NPU, but sound signals corresponding to different frames are simultaneously processed. A corresponding frame number of the second sound signal processed by the NPU is less than a corresponding frame number of the first sound signal processed by the DSP.

In some embodiments, the n-frame delay exists between processing the first sound signal by the DSP and processing the third sound signal by the DSP. This is finally reflected as follows: The terminal device sequentially receives a 1^{st} frame of first sound signal, a 2^{nd} frame of first sound signal, .... After the terminal device receives an (n+1)^{th} frame of first sound signal, the terminal device outputs a 1^{st} frame of target sound signal corresponding to the 1^{st} frame of first sound signal. After the terminal device receives an (n+2)^{th} frame of first sound signal, the terminal device outputs a 2^{nd} frame of target sound signal corresponding to the 2^{nd} frame of first sound signal. By analogy, an n-frame delay exists between input and output of the terminal device, and a process of outputting the target sound signal of the terminal device has specific real-time performance and continuity.

In some embodiments, a value of n is any integer from 1 to 10.

In some embodiments, the delay between processing the first sound signal by the DSP and processing the third sound signal by the DSP may be less than n frames, but an n-frame delay exists between receiving the first sound signal by the DSP and outputting the target sound signal by the DSP.

It should be understood that performing transmission and processing on a sound signal in this embodiment of this application may be transmitting and processing the sound signal, or may be transmitting and processing sound-related data, or may be transmitting and processing the sound signal and sound-related data.

In this embodiment of this application, processing of the second sound signal by the NPU has a delay relative to processing of the first sound signal by the DSP (which may also be understood as that a delay exists between receiving the first sound signal by the DSP and outputting the target sound signal by the DSP). In other words, processing of the NPU is asynchronous processing relative to the DSP. In this way, after processing a frame of first sound signal, the DSP does not need to wait for a third sound signal that corresponds to the frame and that is output by the NPU, and continues to process a next frame of first sound signal. After a delay frame number is reached, the third sound signal that corresponds to the frame and that is output by the NPU is obtained, and the third sound signal is processed and output. In this way, sound signals can be continuously output in a case of an insufficient buffer of the NPU, to meet requirements for continuity and real-time performance of sound output.

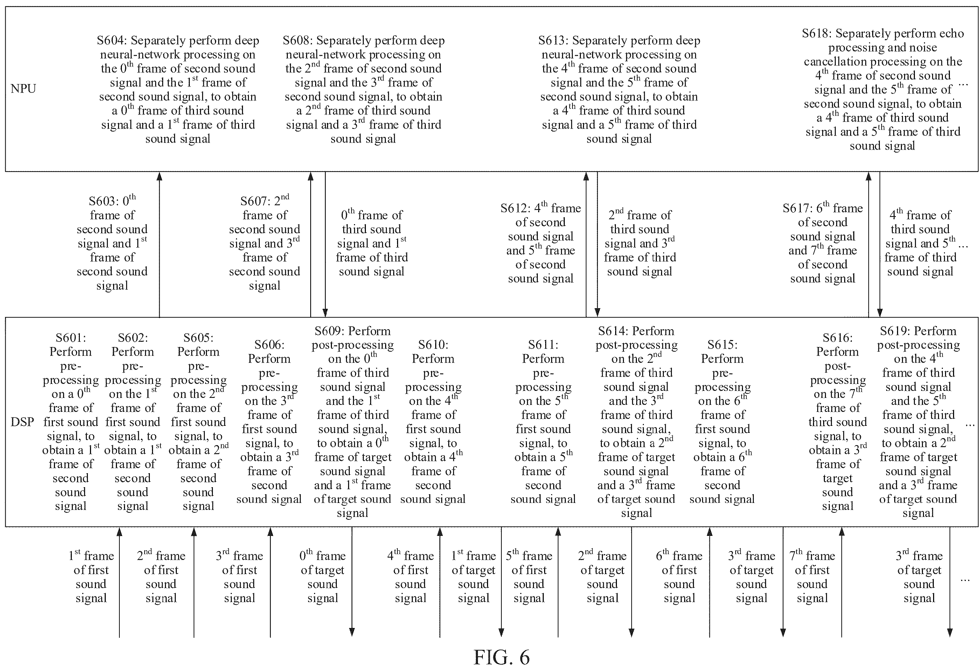

To describe a delay characteristic of processing of the DSP and processing of the NPU more clearly, for example, a delay of three frames (that is, n=3) is used as an example. FIG. 6 is a schematic flowchart of another sound signal processing method 600 according to an embodiment of this application. As shown in FIG. 6, the method 600 includes the following steps.

S601: A DSP performs pre-processing on a 0^{th} frame of first sound signal, to obtain a 0^{th} frame of second sound signal.

The 0^{th} frame of first sound signal is not a continuously input sound signal but a preset sound signal, for example, may be a preset sound signal converged based on an algorithm.

S602: The DSP performs pre-processing on a received 1^{st} frame of first sound signal, to obtain a 1^{st} frame of second sound signal.

A process of performing pre-processing on the first sound signal by the DSP is described in detail in the embodiment shown in FIG. 4. For brevity, details are not described herein again.

S603: The DSP transmits, to an NPU, the 0^{th} frame of second sound signal and the 1^{st} frame of second sound signal that are obtained through pre-processing.

A method for transmitting the second sound signal by the DSP to the NPU is described in detail in the embodiment shown in FIG. 4. For brevity, details are not described herein again.

S604: The NPU separately performs deep neural-network processing on the 0^{th} frame of second sound signal and the 1^{st} frame of second sound signal, to obtain a 0^{th} frame of third sound signal and a 1^{st} frame of third sound signal.

A process of performing deep neural-network processing on the second sound signal by the NPU is described in detail in the embodiment shown in FIG. 4. For brevity, details are not described herein again.

S605: The DSP performs pre-processing on a received 2^{nd} frame of first sound signal, to obtain a 2^{nd} frame of second sound signal.

S607: The DSP transmits, to the NPU, the 2^{nd} frame of second sound signal and the 3^{rd} frame of second sound signal that are obtained through pre-processing.

S608: The NPU separately performs deep neural-network processing on the 2^{nd} frame of second sound signal and the 3^{rd} frame of second sound signal, to obtain a 2^{nd} frame of third sound signal and a 3^{rd} frame of third sound signal.

S609: The DSP receives the 0^{th} frame of third sound signal and the 1^{st} frame of third sound signal that are transmitted by the NPU, and performs post-processing on the 0^{th} frame of third sound signal and the 1^{st} frame of third sound signal, to obtain a 0^{th} frame of target sound signal and a 1^{st} frame of target sound signal, so that the DSP outputs the 0^{th} frame of target sound signal after receiving a 3^{rd} frame of first sound signal.

A process of performing post-processing on the third sound signal by the DSP is described in detail in the embodiment shown in FIG. 4. For brevity, details are not described herein again.

S610: The DSP performs pre-processing on a received 4^{th} frame of first sound signal to obtain a 4^{th} frame of second sound signal, and the DSP outputs the 1^{st} frame of target sound signal after receiving the 4^{th} frame of first sound signal.

S611: The DSP performs pre-processing on a received 5^{th} frame of first sound signal, to obtain a 5^{th} frame of second sound signal.

S612: The DSP transmits, to the NPU, the 4^{th} frame of second sound signal and the 5^{th} frame of second sound signal that are obtained through pre-processing.

S613: The NPU separately performs deep neural-network processing on the 4^{th} frame of second sound signal and the 5^{th} frame of second sound signal, to obtain a 4^{th} frame of third sound signal and a 5^{th} frame of third sound signal.

S614: The DSP receives the 2^{nd} frame of third sound signal and the 3^{rd} frame of third sound signal that are transmitted by the NPU, and performs post-processing on the 2^{nd} frame of third sound signal and the 3^{rd} frame of third sound signal to obtain a 2^{nd} frame of target sound signal and a 3^{rd} frame of target sound signal, so that the DSP outputs the 2^{nd} frame of target sound signal after receiving the 5^{th} frame of first sound signal.

S615: The DSP performs pre-processing on a received 6^{th} frame of first sound signal, to obtain a 6^{th} frame of second sound signal.

S616: The DSP performs pre-processing on a received 7^{th} frame of first sound signal, to obtain a 7^{th} frame of second sound signal.

S617: The DSP transmits, to the NPU, the 6^{th} frame of second sound signal and the 7^{th} frame of second sound signal that are obtained through pre-processing.

S618: The NPU separately performs deep neural-network processing on the 6^{th} frame of second sound signal and the 7^{th} frame of second sound signal, to obtain a 6^{th} frame of third sound signal and a 7^{th} frame of third sound signal.

S619: The DSP receives the 4^{th} frame of third sound signal and the 5^{th} frame of third sound signal that are transmitted by the NPU, and performs post-processing on the 4^{th} frame of third sound signal and the 5^{th} frame of third sound signal to obtain a 4^{th} frame of target sound signal and a 5^{th} frame of target sound signal, so that the DSP outputs the 4^{th} frame of target sound signal after receiving the 7^{th} frame of first sound signal.

(The rest may be deduced by analogy.)

It should be understood that a sequence of the foregoing steps in this embodiment of this application is not limited by step numbers, and the step numbers are introduced merely for clearly describing this embodiment of this application.

It should be further understood that when the DSP processes two consecutive received frames of second sound signals, the DSP also synchronously processes a newly received first sound signal. For example, in a process in which the DSP performs S604, the DSP synchronously performs step S605 and subsequent steps. After completing processing the two consecutive received frames of second sound signals to obtain two consecutive frames of third sound signals, the DSP simultaneously sends the third sound signals to the DSP. The DSP processes the two consecutive frames of third sound signals to obtain two consecutive frames of target sound signals, and outputs the target sound signals at a corresponding output occasion. For example, when a delay is three frames, after the DSP receives an (i+3)^{th} frame of first sound signal, the DSP outputs an i^{th} frame of target sound signal.

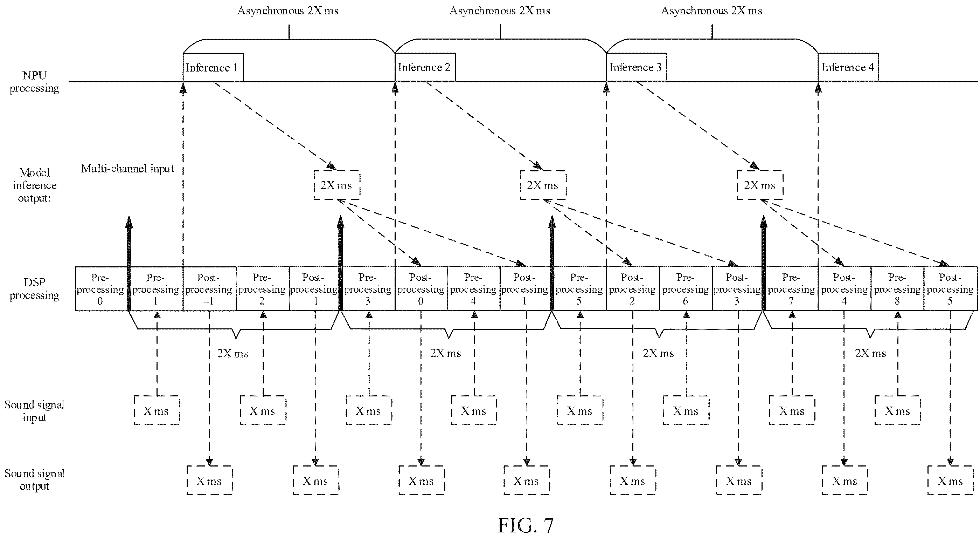

Based on the embodiment shown in FIG. 6, for example, a delay of three frames (that is, n=3) is used as an example. FIG. 7 is a schematic flowchart of another sound signal processing method 700 according to an embodiment of this application. As shown in FIG. 7, the method 700 includes the following steps.
(1) The DSP continuously receives a first sound signal whose length is X ms. The first sound signal whose length is X ms may be understood as one frame of first sound signal in the foregoing embodiment. In addition, each time the DSP receives a first sound signal whose length is X ms, the DSP performs pre-processing on the first sound signal to obtain a second sound signal whose length is X ms.

In some embodiments, a value of X is any value from 8 to 20, for example, may be 10.

(2) Each time the DSP outputs two second sound signals whose lengths are X ms, the DSP transmits, to the NPU by using the CPU, the two output second sound signals whose lengths are X ms.

(3) The NPU performs deep neural-network processing on the two second sound signals whose lengths are X ms and that are output by the DSP, to obtain two third sound signals whose lengths are X ms (that is, an inference step of the NPU shown in FIG. 7), and transmits, to the DSP by using the CPU, the two third sound signals whose lengths are X ms.

In other words, processing the second sound signal by the NPU has a delay relative to processing the first sound signal by the DSP.

(4) After receiving the two third sound signals whose lengths are X ms, the DSP performs post-processing on the third sound signals to obtain two target sound signals whose lengths are X ms, and outputs the target sound signals.

To ensure continuity and real-time performance of output of the target sound signal, a delay exists between performing pre-processing on the first sound signal by the DSP and performing post-processing on the third sound signal. For example, in this embodiment of this application, a three-frame delay exists between performing pre-processing on the first sound signal by the DSP and performing post-processing on the third sound signal. For example, in FIG. 7, this is specifically as follows: Only when the DSP performs pre-processing on a received 4^{th} first sound signal, the DSP performs post-processing on a 1^{st} third sound signal and outputs a processed sound signal. Only when the DSP performs pre-processing on a received 5^{th} first sound signal, the DSP performs post-processing on a 2^{nd} third sound signal and outputs a processed sound signal. Only when the DSP performs pre-processing on a received 6^{th} first sound signal, the DSP performs post-processing on a 3^{rd} third sound signal and outputs a processed sound signal. Only when the DSP performs pre-processing on a received 7^{th} first sound signal, the DSP performs post-processing on a 4^{th} third sound signal and outputs a processed sound signal. Only when the DSP performs pre-processing on a received 8^{th} first sound signal, the DSP performs post-processing on a 5^{th} third sound signal and outputs a processed sound signal.

The DSP processes data once every X ms. Herein, 2X ms indicates that the DSP accumulates two frames of first sound signals each time before transmitting the two sound signals to the NPU for inference (that is, the NPU processes the two frames of second sound signals to obtain two frames of third sound signals), provided that the NPU returns the two frames of third sound signals after completing inference within 2X ms. In this way, an inference time of the NPU is increased, and the NPU returning the third sound signal to the DSP is also returning both the two frames of third sound signals (that is, data of 2X ms).

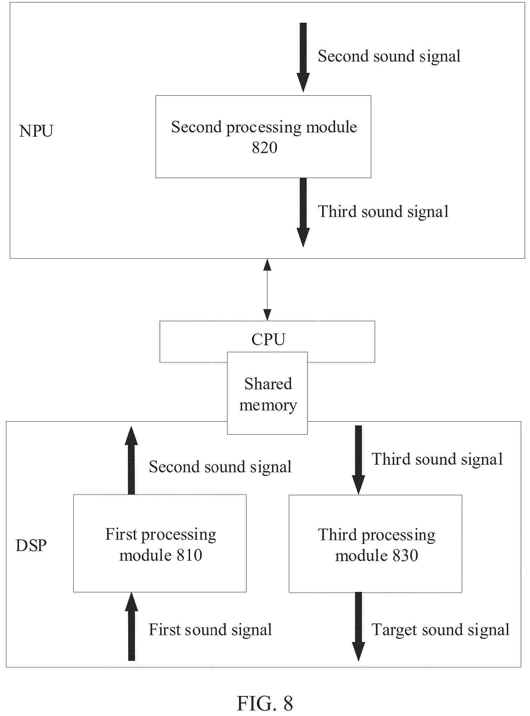

For example, FIG. 8 is a diagram of a sound signal processing apparatus according to an embodiment of this application.

As shown in FIG. 8, mutual signal transmission is implemented between a DSP and a CPU by using a shared memory. The CPU may invoke an NPU to implement mutual signal transmission with the NPU. The DSP includes a first processing module 810 and a third processing module 830. The NPU includes a second processing module 820. The first processing module 810 is configured to process a first sound signal to obtain a second sound signal. The second processing module 820 is configured to process the second sound signal to obtain a third sound signal. The third processing module 830 is configured to process the third sound signal to obtain a target sound signal.

In another implementation, the DSP includes only the first processing module 810, and the first processing module 810 may be further configured to process the third sound signal to obtain the target sound signal.

In some embodiments, the second processing module 820 may be a speech deep learning model.

Explanations of the first sound signal, the second sound signal, the third sound signal, and the target sound signal are described in detail in the embodiment shown in FIG. 4. For brevity, details are not described herein again.

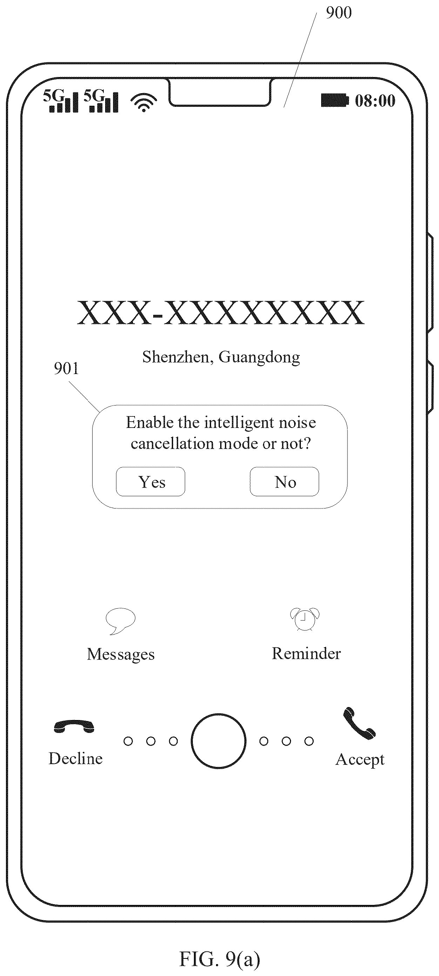

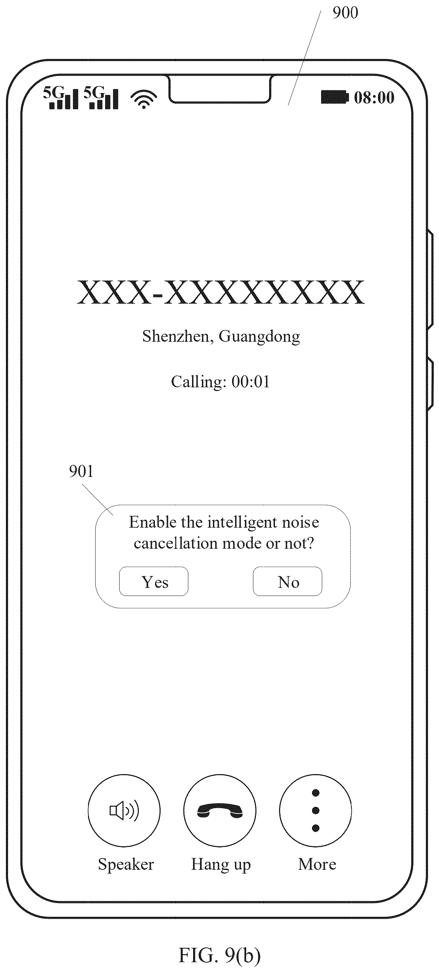

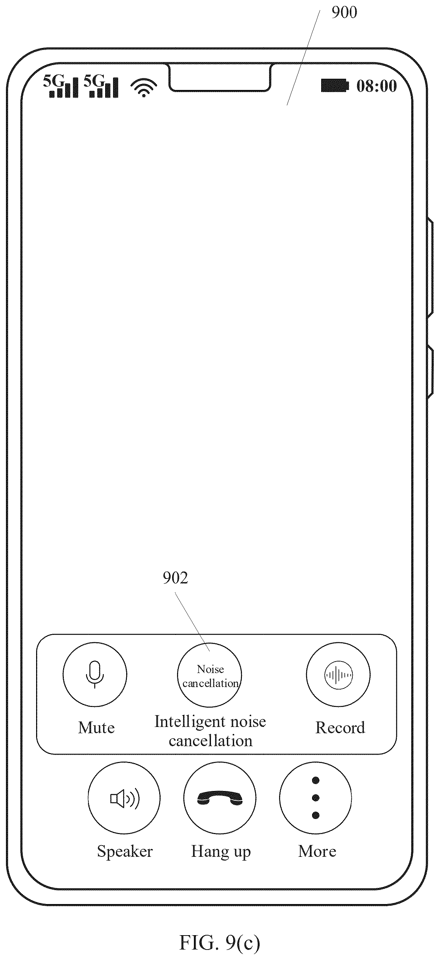

For example, FIG. 9(a), FIG. 9(b), and FIG. 9(c) are a diagram of an interface of enabling an intelligent noise cancellation mode according to an embodiment of this application.

As shown in FIG. 9(a), FIG. 9(b), and FIG. 9(c), in an implementation, an incoming call interface displayed when a device 900 receives an incoming call prompt is shown in FIG. 9(a). In the interface, a pop-up box 901 may be displayed. The pop-up box 901 is used to prompt a user whether to enable an intelligent noise cancellation mode. When the user taps a control "Yes" in the pop-up box, the device 900 enables the intelligent noise cancellation mode. In this way, after the user answers the incoming call, a speech output by the device 900 is obtained by performing processing by using the method in any one of the embodiments shown in FIG. 4 to FIG. 7. When the user taps a control "No" in the pop-up box, the device 900 does not enable the intelligent noise cancellation mode.

In another implementation, after the device 900 receives the incoming call prompt, the pop-up box 901 is not displayed in the incoming call interface. After the user confirms to answer an incoming call, the pop-up box 901 is displayed in a call interface (as shown in FIG. 9(b)). In the call interface, the pop-up box 901 is used to notify the user whether to enable the intelligent noise cancellation mode. When the user taps the control "Yes" in the pop-up box, the device 900 enables the intelligent noise cancellation mode. In this way, a speech output by the device 900 is obtained by performing processing by using the method in any one of the embodiments shown in FIG. 4 to FIG. 7. When the user taps the control "No" in the pop-up box, the device 900 does not enable the intelligent noise cancellation mode.

In some embodiments, the pop-up box 901 is displayed merely in incoming call interfaces or call interfaces of the device 900 in first several times (for example, first three times or first five times).

In another implementation, the pop-up box 901 is displayed in neither an incoming call answer interface and the call interface. In this case, in a process, the user may tap a control "More" in the call interface to view functional controls that are not displayed. These function controls that are not displayed include a control 902 used to enable and disable the intelligent noise cancellation mode. When the user taps the control 902, the device 900 enables the intelligent noise cancellation mode. In this way, a speech output by the device 900 is obtained by performing processing by using the method in any one of the embodiments shown in FIG. 4 to FIG. 7. When the user wants to disable the intelligent noise cancellation mode, the user may tap the control 902 again.

It should be understood that in this embodiment of this application, a scenario in which a device receives an incoming call is merely used as an example. The solutions in this embodiment of this application may be further applied to a scenario in which the device initiates a call, or may be applied to any voice call scenario such as a video call or an online conference of the device.

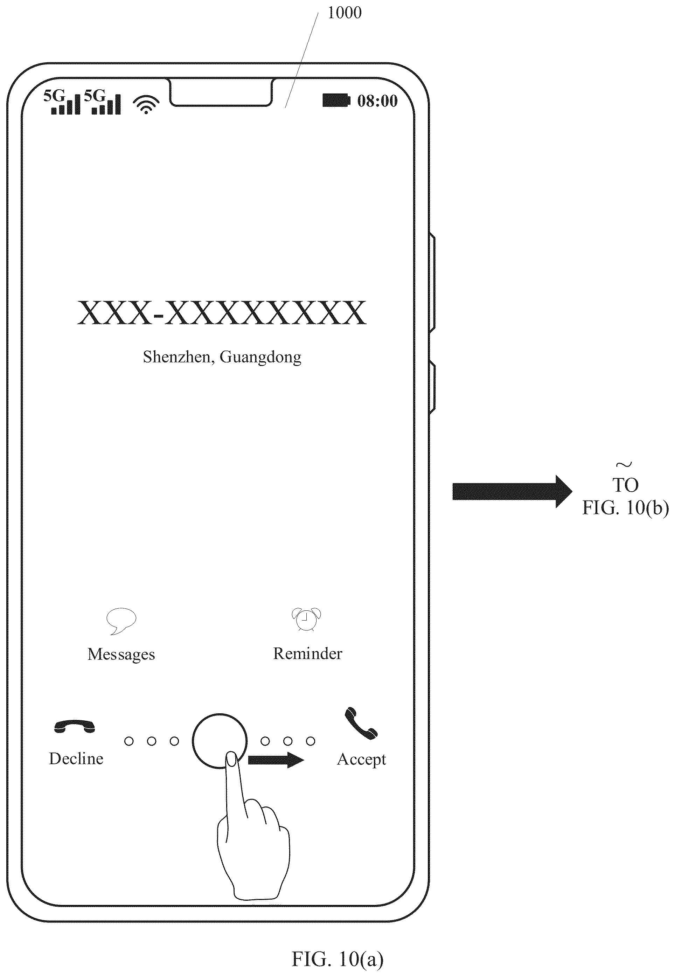

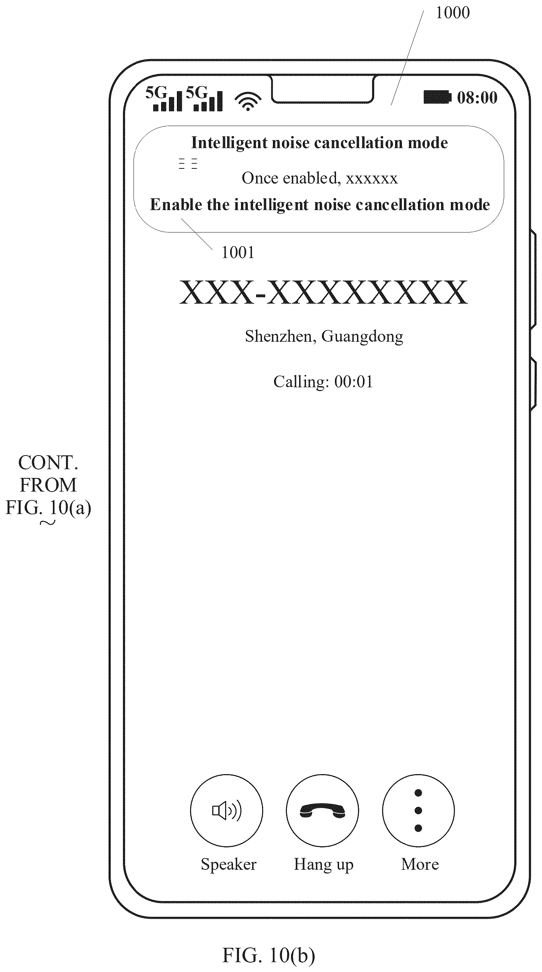

For example, FIG. 10(a) and FIG. 10(b) are a diagram of another interface of enabling an intelligent noise cancellation mode according to an embodiment of this application.

As shown in FIG. 10(a) and FIG. 10(b), in an implementation, when an electronic device 1000 receives an incoming call prompt, a displayed incoming call interface is shown in FIG. 10(a). After a user answers an incoming call (for example, a slide-up operation on the interface shown in FIG. 10(a) to answer the incoming call), a display interface on the electronic device 1000 is switched to a calling interface (as shown in FIG. 10(b)). A pop-up box 1001 may be displayed in the calling interface. The pop-up box 1001 is used to notify the user whether to enable an intelligent noise cancellation mode. The user may enable the intelligent noise cancellation mode by tapping any position of the pop-up box. After the user enables the intelligent noise cancellation mode, a speech output by the device 1000 is obtained by performing processing by using the method in any one of the embodiments shown in FIG. 4 to FIG. 7. For example, the pop-up box 1001 may include displayed content or controls such as "Intelligent noise cancellation mode", "Once enabled, voice call quality can be improved", "Tap any position to enable the intelligent noise cancellation mode", or "Tap here to enable the intelligent noise cancellation mode".

After the user taps the pop-up box 1001, the pop-up box 1001 is not displayed.

In some embodiments, the pop-up box 1001 may be displayed in an interface of the electronic device 1000 in an entire call process; or the pop-up box 1001 may be displayed from a moment of just displaying a call interface, and automatically disappear after being displayed for a specific duration.

In some embodiments, the pop-up box 1001 is displayed during first m calls on the electronic device 1000. If the user does not tap the pop-up box 1001 in the m calls, the pop-up box 1001 is no longer displayed in a call interface after an m^{th} call.

It should be understood that in this embodiment of this application, a scenario in which a device receives an incoming call is merely used as an example. The solutions in this embodiment of this application may be further applied to a scenario in which the device initiates a call, or may be applied to any voice call scenario such as a video call or an online conference of the device.

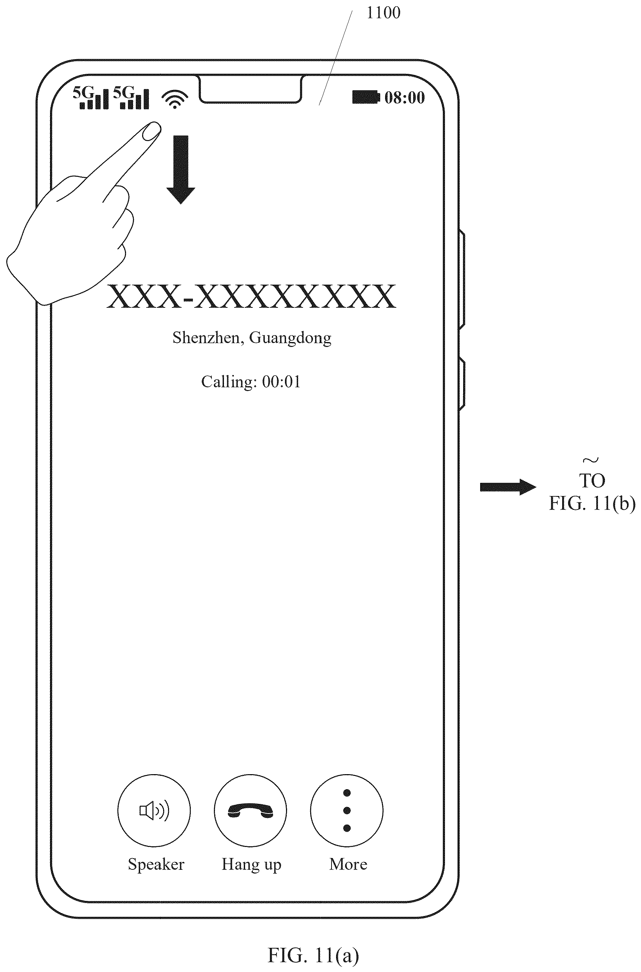

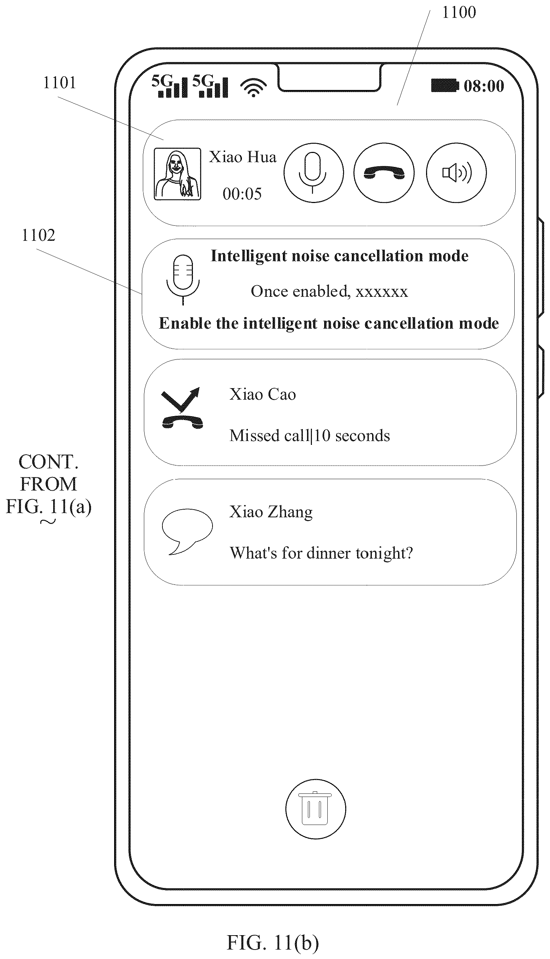

For example, FIG. 11(a) and FIG. 11(b) are a diagram of still another interface of enabling an intelligent noise cancellation mode according to an embodiment of this application.

As shown in FIG. 11(a) and FIG. 11(b), in an implementation, a current display interface of an electronic device 1100 is a call interface (as shown in FIG. 11(a)). In this case, when a user wants to enable an intelligent noise cancellation mode, the user may perform a slide-down operation on a screen of the electronic device 1100 to view a notification bar on the electronic device 1100 (as shown in FIG. 11(b)). A plurality of notification items are displayed in a display interface of the notification bar. For example, the plurality of notification items may include a notification item 1101 and a notification item 1102. The notification item 1101 is used to notify the user that the user is currently in a call. The notification item 1101 may further display information related to the current call, for example, a call object and a call duration. The notification item 1101 may further include a plurality of controls, for example, a mute control, a hang-up control, and a speaker control. The notification item 1102 is used to notify the user whether to enable the intelligent noise cancellation mode. The user may enable the intelligent noise cancellation mode by tapping any position of the notification item 1102. After the user enables the intelligent noise cancellation mode, a speech output by the device 1100 is obtained by performing processing by using the method in any one of the embodiments shown in FIG. 4 to FIG. 7. For example, the notification item 1102 may include displayed content or controls such as "Intelligent noise cancellation mode", "Once enabled, voice call quality can be improved", "Tap any position to enable the intelligent noise cancellation mode", or "Tap here to enable the intelligent noise cancellation mode". After the user taps the notification item 1102, the notification item 1102 is not displayed.

In some embodiments, the notification item 1102 may be displayed in the notification bar of the electronic device 1100 in the entire call process; or the notification item 1102 may be displayed in the notification bar of the electronic device 1100 at a moment of just displaying the call interface, and automatically disappear after being displayed for a specific duration.

In some embodiments, the notification item 1102 is displayed in the notification bar of the electronic device 1100 during first m calls on the electronic device 1000. If the user does not tap the notification item 1102 in the m calls, the notification item 1102 is no longer displayed in the notification bar of the electronic device 1100 in a call process after an m^{th} call.

In some embodiments, the embodiment shown in FIG. 10(a) and FIG. 10(b) and the embodiment shown in FIG. 11(a) and FIG. 11(b) are implemented in combination.

In an example, when the user selects the intelligent noise cancellation mode in the interface shown in FIG. 10(b), the notification item 1102 is not displayed in the interface shown in FIG. 11(b), but a notification item used to notify the user that the user is currently in the intelligent noise cancellation mode may be displayed. In addition, a control for disabling the intelligent noise cancellation mode at any time may be further provided for the user.

In another example, if the user does not select the intelligent noise cancellation mode in the interface shown in FIG. 10(b), the pop-up box 1001 is no longer displayed in the call interface after the call reaches a specific duration, that is, the display interface of the electronic device is switched to the interface shown in FIG. 11(a). If the user wants to enable the intelligent noise cancellation mode again, the user may enable the intelligent noise cancellation mode by using the method provided in the embodiment shown in FIG. 11(a) and FIG. 11(b).

It should be understood that in this embodiment of this application, a scenario in which a device receives an incoming call is merely used as an example. The solutions in this embodiment of this application may be further applied to a scenario in which the device initiates a call, or may be applied to any voice call scenario such as a video call or an online conference of the device.

One or more of the modules or units described in this specification may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may include but is not limited to at least one of the following various compute devices that run software: a central processing unit (central processing unit, CPU), a microprocessor, a digital signal processor (DSP), a microcontroller unit (microcontroller unit, MCU), an artificial intelligence processor, or the like. Each compute device may include one or more cores used to execute software instructions to perform operations or processing. The processor may be built in a SoC (system on chip) or an application-specific integrated circuit (application-specific integrated circuit, ASIC), or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or may not depend on software to execute the foregoing method procedure.

When the modules or units described in this specification are implemented by using software, all or a part of the modules or units may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

A person of ordinary skill in the art may be aware that the units and method steps described with reference to the examples in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sound signal processing method, wherein the method comprises:
performing, by a digital signal processor DSP, pre-processing on a first sound signal, to output a second sound signal;
transmitting, by the DSP, the second sound signal to a neural-network processing unit NPU through a central processing unit CPU, and receiving a third sound signal output by the NPU, wherein the third sound signal is a sound signal obtained by performing deep neural-network processing on the second sound signal by the NPU; and
performing, by the DSP, post-processing on the third sound signal, to output a target sound signal.

2. The method according to claim 1, wherein transmitting, by the DSP, the second sound signal to the NPU through the CPU comprises:
transmitting, by the DSP, the second sound signal to the CPU through a shared memory, so that the CPU transmits the second sound signal to the NPU by invoking the NPU, wherein the shared memory is a shared memory of the DSP and the CPU.

3. The method according to claim 1 or 2, wherein the pre-processing comprises one or more of echo cancellation, noise cancellation, gain control, and frequency response control.

4. The method according to any one of claims 1 to 3, wherein the deep neural-network processing comprises residual echo cancellation and/or noise cancellation.

5. The method according to any one of claims 1 to 4, wherein the post-processing comprises gain control and frequency response control.

6. The method according to any one of claims 1 to 5, wherein the method further comprises:
when the DSP receives an (n+i)^{th} frame of first sound signal, outputting, by the DSP, an i^{th} frame of target sound signal; and
when the DSP receives an (n+i+1)^{th} frame of first sound signal, outputting, by the DSP, an (i+1)^{th} frame of target sound signal, wherein
n is a positive integer less than or equal to 10, i is a natural number, and i=1, 2, 3, ....

7. A sound signal processing method, wherein the method comprises:
receiving, by a neural-network processing unit NPU, a second sound signal through a central processing unit CPU, wherein the second sound signal is a sound signal obtained by performing pre-processing on a first sound signal by a digital signal processor DSP;
performing, by the NPU, deep neural-network processing on the second sound signal, to output a third sound signal; and
transmitting, by the NPU, the third sound signal to the DSP through the CPU.

8. The method according to claim 7, wherein transmitting, by the NPU, the third sound signal to the DSP through the CPU comprises:
transmitting, by the NPU, the third sound signal to the DSP through the CPU and a shared memory, wherein the shared memory is a shared memory of the DSP and the CPU.

9. The method according to claim 7 or 8, wherein the pre-processing comprises one or more of echo cancellation, noise cancellation, gain control, and frequency response control.

10. The method according to any one of claims 7 to 9, wherein the deep neural-network processing comprises residual echo cancellation and/or noise cancellation.

11. A sound signal processing method, wherein the method comprises:
when a screen of a first device displays a call interface, displaying a first prompt on the screen of the first device, wherein the first prompt is used to prompt a user to confirm whether to enable an intelligent noise cancellation mode; or when the first device is in a call state, displaying a first notification in a notification bar of the first device, wherein the first notification is used to prompt a user to confirm whether to enable an intelligent noise cancellation mode; and
in response to a user operation of confirming to enable the intelligent noise cancellation mode, performing, by the first device, the method according to any one of claims 1 to 6 or the method according to any one of claims 7 to 10.

12. An electronic device, wherein the electronic device comprises: a digital signal processor DSP, a central processing unit CPU, and a neural-network processing unit NPU, wherein
the DSP is configured to perform pre-processing on a first sound signal, to output a second sound signal;
the DSP is further configured to transmit the second sound signal to the NPU through the CPU;
the NPU is configured to perform deep neural-network processing on the second sound signal, to output a third sound signal;
the NPU is further configured to transmit the third sound signal to the DSP through the CPU; and
the DSP is further configured to perform post-processing on the third sound signal, to output a target sound signal.

13. The electronic device according to claim 12, wherein
the DSP is specifically configured to:
transmit the second sound signal to the CPU through a shared memory, wherein the shared memory is a shared memory of the DSP and the CPU; and
the CPU is configured to:
transmit the second sound signal to the NPU by invoking the NPU.

14. The electronic device according to claim 12 or 13, wherein the pre-processing comprises one or more of echo cancellation, noise cancellation, gain control, and frequency response control.

15. The method according to any one of claims 12 to 14, wherein the deep neural-network processing comprises residual echo cancellation and/or noise cancellation.

16. The method according to any one of claims 12 to 15, wherein the post-processing comprises gain control and frequency response control.

17. The method according to any one of claims 12 to 16, wherein the DSP is specifically configured to:
when an (n+i)^{th} frame of first sound signal is received, output an i^{th} frame of target sound signal; and
when an (n+i+1)^{th} frame of first sound signal is received, output an (i+1)^{th} frame of target sound signal, wherein
n is a positive integer less than or equal to 10, i is a natural number, and i=1, 2, 3, ....

18. An electronic device, wherein the electronic device comprises:
a display module, configured to: when a screen of the electronic device displays a call interface, display a first prompt on the screen of the electronic device, wherein the first prompt is used to prompt a user to confirm whether to enable an intelligent noise cancellation mode; or when the electronic device is in a call state, display a first notification in a notification bar of the electronic device, wherein the first notification is used to prompt a user to confirm whether to enable an intelligent noise cancellation mode; and
an execution module, configured to: in response to a user operation of confirming to enable the intelligent noise cancellation mode, perform the method according to any one of claims 1 to 6 or the method according to any one of claims 7 to 10.

19. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 6, the method according to any one of claims 7 to 10, or the method according to claim 11.

20. A computer-readable storage medium, wherein the storage medium stores a program or instructions, and when the program or the instructions are run, the method according to any one of claims 1 to 6, or the method according to any one of claims 7 to 10, or the method according to claim 11 is implemented.

21. A chip, wherein the chip stores instructions, and when the instructions are run, the method according to any one of claims 1 to 6, or the method according to any one of claims 7 to 10, or the method according to claim 11 is implemented.
